# EUROPEAN PATENT APPLICATION

(11) **EP 3 992 003 A1**
(43) Date of publication of application: **04.05.2022**
(21) Application number: 20833389.8
(22) Date of filing: 22.06.2020
(51) Int. Cl.: B60H 3/00, B60H 3/02, B60H 1/00

(54) **VEHICLE AIR CONDITIONING DEVICE**

(30) Priority: 25.06.2019 JP 2019116841
(71) Applicant: Valeo Japan Co., Ltd., Kumagaya-Shi SAITAMA 360-0193 (JP)
(72) Inventor: SAKURAI, Yusaku, Kumagaya-shi Saitama 360-0193 (JP); NAGANO, Hideki, Kumagaya-shi Saitama 360-0193 (JP); TANAKA, Yuya, Kumagaya-shi Saitama 360-0193 (JP); YOSHIZAKI, Hisayoshi, Kumagaya-shi Saitama 360-0193 (JP); NAKAMURA, Saki, Kumagaya-shi Saitama 360-0193 (JP)
(74) Representative: Valeo Systèmes Thermiques
(86) International application number: PCT/JP2020/024307
(87) International publication number: WO 2020/262276

(57) **Abstract**

The invention provides a vehicle air conditioning device such that air to which a function has been added can be sufficiently supplied into a vehicle cabin, whichever portion of a wall portion that changes an air flow direction a function adding device is installed in. A space delineating wall body (40) that delineates a function adding space (41) between the space delineating wall body (40) and a wall portion (2a) that is a wall portion of an air conditioning case (2), in whose interior an air flow path (3) is formed and which includes a multiple of discharge aperture portions (10, 20, 30), and causes a flow direction of air that has passed through a heat exchanger (4, 5) to change is provided in the wall portion (2a), and a function adding device (43) that adds a predetermined function to air passing through the function adding space (41) is provided in the wall portion (2a) . The function adding space (41) communicates with the air flow path (3) via at least two communication portions (41a, 41b), and at least one communication portion (41a) is opened facing one of the discharge aperture portions (a vent discharge aperture portion 20) in order that a pressure is lower than that of the other communication portion (41b) in a predetermined discharge mode.

## Description

### Technical Field

The present invention relates to a vehicle air conditioning device such that air to which a function such as ions or a fragrance has been added can be sufficiently supplied to a vehicle cabin.

### Background Art

For example, Patent Literature 1 discloses a vehicle air conditioning device such that, in order to alleviate or eliminate a charging of an occupant when alighting from a vehicle, an ion generating device is disposed in an air conditioning air supply path, and when an intention of an occupant to alight is detected, a discharge port of the air conditioning device is set to be a discharge port that blows air at the occupant, air blowing by a fan is carried out, and ions are caused to be generated in the air supply path from the ion generating device.

In particular, this example is such that an ion generator that supplies ions to air conditioning air is installed in an air supply path between a heater core of an air conditioning device and a vent duct, or more specifically, on a side of an air conditioning case of the air conditioning device downstream of an evaporator and farther to an upstream side than a region to which a defrost duct is connected, and when an intention of an occupant to alight is detected, a switch is made to blowing air from a vent discharge port and the ion generator is caused to operate, whereby ions are added from the ion generator to air that has been humidified by condensed water adhering to the evaporator, and the air to which the ions have been added is supplied to a vehicle cabin from the vent discharge port.

Also, Patent Literature 2 discloses a configuration wherein a vehicle air conditioning device that blows air to which ions have been added into a vehicle cabin is such that an ion generator is disposed in a predetermined position on a collision side wall face for causing air that has passed through a heat exchanger to collide, thereby causing a flow to head upward, or on a lateral side wall face laterally adjacent to the wall face. In particular, a configuration shown in Fig. 7 of Patent Literature 2 is such that an ion generator is attached in a range nearer to a vent discharge aperture portion than a range opposed by a heater core on a rear wall face, which is on a side of an air conditioning case downstream of the heat exchanger and is for causing air that has passed through a heat exchanger to collide, thereby causing the air to head upward, and ions are added to air that heads upward after passing through the heater core and colliding with the rear wall face, thereby avoiding a situation wherein ions generated by the ion generator collide with the rear wall face and are annihilated.

### Citation List

### Patent Literature

Patent Literature 1: JP-A-2008-254549
Patent Literature 2: International Publication WO 2017/085954

### Summary of Invention

### Technical Problem

However, when the former configuration is applied to a central type of air conditioning device (a fully-central type or a semi-central type of air conditioning device) wherein an evaporator and a heater core are disposed in a longitudinal direction of a vehicle, there is scarcely any spatial leeway for installing an ion generator between the evaporator of the air conditioning device and a defrost duct, and as air that has passed through a heat exchanger is fed to each discharge aperture portion after a flow direction has been changed considerably due to the air colliding with an air conditioning case on a downstream side of the heat exchanger, ions generated by the ion generator are easily annihilated by colliding with a wall face of the air conditioning case. Because of this, an installation position and an installation structure of the ion generator need to be reviewed.

With regard to this point, the latter configuration is such that an ion generator is attached in a range nearer to a vent aperture portion than a range opposed by a heater core on a rear wall face with which air that has passed through a heat exchanger is caused to collide, because of which an installation space for a function adding device is more easily secured, and a problem wherein air generated by an ion generating device collides with a wall face of an air conditioning case and is annihilated can be reduced, but an installation space for an air conditioning device installed in a vehicle dashboard is considerably limited by a relationship with space allotted to other parts, instruments, or the like, and there are cases wherein sufficient installation space cannot be secured in a portion nearer a discharge port, even on a rear wall face with which air that has passed through the heat exchanger is caused to collide. Consequently, in this kind of case, changing the installation position of the ion generator is unavoidable. For example, there are cases wherein the ion generator is unavoidably installed in a region that is a wall face with which air that has passed through the heat exchanger is caused to collide, and where an air flow direction is divided into upward and downward directions (a region in which air branches into air directed toward a vent discharge aperture portion and air directed toward a foot discharge aperture portion).

This kind of wall face region wherein air is divided into upward and downward directions is such that air stagnation is liable to occur in this portion, and when an ion generator is installed in this portion, a problem in that air to which ions have been added cannot be effectively supplied to a discharge aperture portion is conceivable.

The invention, having been contrived in consideration of such a situation, has a main object of providing a vehicle air conditioning device such that air to which a function has been added can be sufficiently supplied into a vehicle cabin, whichever portion of a wall portion that changes an air flow direction a function adding device is installed in.

### Solution to Problem

In order to achieve the heretofore described object, a vehicle air conditioning device according to the invention is a vehicle air conditioning device that releases air to which a function has been added into a vehicle cabin, and is characterized by including an air conditioning case, in whose interior an air flow path is formed and which includes a multiple of discharge aperture portions that can blow introduced air into the vehicle cabin, and a heat exchanger, disposed inside the air conditioning case, that causes an exchange of heat with introduced air, wherein a space delineating wall body that delineates a function adding space between the space delineating wall body and a wall portion, which is a wall portion of the air conditioning case and causes a flow direction of air that has passed through the heat exchanger to change, is provided in the wall portion, a function adding device that adds a predetermined function to air passing through the function adding space is provided in the wall portion or the space delineating wall body, the function adding space communicates with the air flow path via at least two communication portions, and at least one communication portion is opened facing one of the multiple of discharge aperture portions in order that a pressure is lower than that of the other communication portion in a predetermined discharge mode.

Herein, the communication portions may be formed of aperture portions formed in the space delineating wall body, or may be formed between the space delineating wall body and the wall portion.

Consequently, a function adding space is delineated by providing a space delineating wall body in an air conditioning case wall portion that causes a flow direction of air that has passed through a heat exchanger to change, a predetermined function is added to air passing through the function adding space by providing a function adding device in the air conditioning case wall portion that causes the flow direction of air that has passed through a heat exchanger to change, or in the space delineating wall body, and at least one communication portion of the space delineating wall body that connects the function adding space and an air flow path is opened facing one discharge aperture portion in order that a pressure is lower than that of another communication portion in a predetermined discharge mode, because of which air is suctioned from the other communication portion in the function adding space in the predetermined discharge mode, and after a function is added from the function adding device in the function adding space, the air is returned to the air flow path from the communication portion that has relatively low pressure (at least one communication portion can be provided with an advantage of drawing air that has passed through the function adding space). Because of this, air to which a function has been added by the function adding device can be effectively supplied from an opened discharge aperture portion, without being caused to stop in the function adding space.

The heretofore described configuration is such that the multiple of discharge aperture portions are a vent discharge aperture portion, which supplies air to be blown to a vehicle cabin upper region, and a foot discharge aperture portion, which supplies air to be blown to a vehicle cabin lower region, and when particularly wishing to sufficiently supply air to which a function has been added from the vent discharge aperture portion, it is good when the function adding device and the space delineating wall body are provided in the wall portion between the vent discharge aperture portion and the foot discharge aperture portion, the function adding space is connected to the air flow path via a first communication portion provided toward the vent discharge aperture portion and a second communication portion provided toward the foot discharge aperture portion, and the first communication portion is opened facing the vent discharge aperture portion in order that a pressure is lower than that of the second communication portion at a time of a discharge mode wherein the vent discharge aperture portion is opened.

This kind of configuration is such that the space delineating wall body is provided in the wall portion between the vent discharge aperture portion and the foot discharge aperture portion, and the first communication portion provided toward the vent discharge aperture portion is opened facing the vent discharge aperture portion in order that a pressure is lower than that of the second communication portion provided toward the foot discharge aperture portion at a time of a discharge mode wherein the vent discharge aperture portion is opened (a time of a vent discharge mode or a time of a bi-level discharge mode), because of which air is suctioned from the second communication portion in the function adding space, and after a function is added from the function adding device in the function adding space, the air is returned to the air flow path from the first communication portion, which has relatively low pressure (the first communication portion can be provided with an advantage of drawing air inside the function adding space). Because of this, air can be actively suctioned into the function adding space via the second communication portion, and air to which a function has been added can be effectively led from the first communication portion to the vent discharge aperture portion, without being caused to stop in the function adding space.

Also, the multiple of discharge aperture portions are a vent discharge aperture portion, which supplies air to be blown to a vehicle cabin upper region, and a foot discharge aperture portion, which supplies air to be blown to a vehicle cabin lower region, and when particularly wishing to sufficiently supply air to which a function has been added from the foot discharge aperture portion, it is good when the function adding device and the space delineating wall body are provided in the wall portion between the vent discharge aperture portion and the foot discharge aperture portion, the function adding space is connected to the air flow path via a first communication portion provided toward the vent discharge aperture portion and a second communication portion provided toward the foot discharge aperture portion, and the second communication portion is opened facing the foot discharge aperture portion in order that a pressure is lower than that of the first communication portion at a time of a discharge mode wherein the foot discharge aperture portion is opened.

This kind of configuration is such that the space delineating wall body is provided in the wall portion between the vent discharge aperture portion and the foot discharge aperture portion, and the second communication portion provided toward the foot discharge aperture portion is opened facing the foot discharge aperture portion in order that a pressure is lower than that of the first communication portion provided toward the vent discharge aperture portion at a time of a discharge mode wherein the foot discharge aperture portion is opened (a time of a foot discharge mode), because of which air is suctioned from the first communication portion in the function adding space, and after a function is added from the function adding device in the function adding space, the air is returned to the air flow path from the second communication portion, which has relatively low pressure (the second communication portion can be provided with an advantage of drawing air inside the function adding space) . Because of this, air can be actively suctioned into the function adding space via the first communication portion, and air to which a function has been added can be effectively led from the second communication portion to the foot discharge aperture portion, without being caused to stop in the function adding space.

Herein, it is good when the communication portion having relatively low pressure is formed in a position nearer than the other communication portion to a discharge aperture portion.

By an opened end of a communication portion of the space delineating wall body having relatively low pressure being brought nearer than the other communication portion to a discharge aperture portion in this way, an advantage of drawing air in the function adding space can be increased.

Also, the space delineating wall body (13) may be such that an intermediate portion of a face with which air flowing from upstream collides is caused to protrude to an upstream side.

This kind of configuration is such that air can smoothly be caused to flow divided toward the communication portions at the face of the space delineating wall body with which air flowing from upstream collides, whereby the advantage of drawing air in the function adding space is easily obtained.

Furthermore, a guide portion that facilitates an introduction of air into the other communication portion may be provided in a portion of the space delineating wall body in which the other communication portion is formed, or in a vicinity thereof.

As this kind of guide portion, the space delineating wall body may be caused to protrude into a chamber in such a way that the passage cross-sectional area of the other communication portion increases toward the opened end, or a guide plate that blocks air attempting to flow away from the function adding space may be provided in a vicinity of the other communication portion.

Further still, the function adding space delineated by the space delineating wall body may be such that a passage cross-sectional area of an intermediate portion is formed to be smaller than a passage cross-sectional area of the communication portions.

This kind of configuration is such that air suctioned into the function adding space is such that a function is added from the function adding device, and a flow speed is increased in the intermediate portion, after which the air is released from the communication portion with a relatively large passage cross-sectional area, because of which air to which a function has been added is supplied promptly to a discharge aperture portion without colliding with the space delineating wall body. Because of this, a problem wherein a function is reduced due to air to which a function has been added colliding with the space delineating wall body can be avoided.

When the heretofore described vehicle air conditioning device has a cooling heat exchanger, which cools air passing through, and a heating heat exchanger, which is disposed on a downstream side of the cooling heat exchanger and heats air passing through, as the heat exchanger, the heating heat exchanger may be disposed in the air flow path in such a way as to form a bypass passage on an upper side and a lower side of the heating heat exchanger, or may be disposed in the air flow path in such a way as to form a bypass passage on the upper side only of the heating heat exchanger.

A function having at least one of an ion adding function, a fragrance function, a deodorizing function, a humidity adjusting function, and a sanitizing function is conceivable as a function added to air by the function adding device. Advantageous Effects of Invention

According to the invention, as heretofore described, a function adding space is delineated by providing a space delineating wall body in an air conditioning case wall portion that causes a flow direction of air that has passed through a heat exchanger to change, a function adding device that adds a predetermined function to air passing through the function adding space is provided in the air conditioning case wall portion or in the space delineating wall body, and at least one communication portion that connects the function adding space and an air flow path is opened facing one discharge aperture portion in order that a pressure is lower than that of another communication portion in a predetermined discharge mode, because of which at least one communication portion can be provided with an advantage of drawing air that has passed through the function adding space, and air to which a function has been added by the function adding device can be sufficiently supplied to an opened discharge aperture portion, without being caused to stop in the function adding space.

### Brief Description of Drawings

[Fig. 1] Fig. 1(a) is a side sectional view showing a configuration example of a vehicle air conditioning device according to the invention on a side downstream from a heat exchanger, and Fig. 1(b) is a drawing of a portion of discharge aperture portions of the air conditioning device seen from above.
[Fig. 2] Fig. 2 is a planar sectional view showing a configuration example of the vehicle air conditioning device according to the invention on a side downstream from the heat exchanger, and is a drawing seen from an A-A line of Fig. 1(a).
[Fig. 3] Fig. 3 is a drawing showing an attached state of a space delineating wall body and a function adding device, wherein (a) is a side sectional view thereof, and (b) is a perspective view thereof.
[Fig. 4] Fig. 4 is a drawing illustrating a flow of air at a time of a vent discharge mode.
[Fig. 5] Fig. 5 is a drawing illustrating a flow of air at a time of a bi-level discharge mode.
[Fig. 6] Fig. 6 is a drawing illustrating a flow of air at the space delineating wall body when air to which a function has been added is supplied to a vent discharge aperture portion.
[Fig. 7] Fig. 7 is a drawing illustrating a flow of air at a time of a foot discharge mode.
[Fig. 8] Fig. 8 is a drawing showing an example wherein the space delineating wall body is extended to a vent discharge aperture.
[Fig. 9] Fig. 9 is a drawing showing an example wherein a portion of the space delineating wall body toward the vent discharge aperture portion is caused to bend in such a way as to follow a flow of air in the vent discharge aperture portion.
[Fig. 10] Fig. 10 is a drawing showing an example wherein an intermediate portion of the space delineating wall body is caused to protrude to an upstream side.
[Fig. 11] Fig. 11 is a drawing showing an example of a case wherein a guide wall is provided immediately below the space delineating wall body.
[Fig. 12] Fig. 12 is a drawing showing an example wherein an opened end of the space delineating wall body toward a foot discharge aperture portion is caused to protrude to the upstream side in order to increase a passage cross-sectional area thereof.
[Fig. 13] Fig. 13 is a drawing showing another example of the space delineating wall body, wherein (a) is a perspective view seen from frontally above, (b) is a side sectional view, and (c) is a perspective view seen from diagonally above.
[Fig. 14] Fig. 14 is a drawing showing another example of the space delineating wall body, and is a perspective view showing an example wherein there are three communication portions connecting the function adding space and an air flow path.
[Fig. 15] Fig. 15 is a drawing showing an example applied to an air conditioning device wherein a bypass passage is formed on only an upper side of a heater core.
[Fig. 16] Fig. 16 is a drawing showing a configuration example wherein air to which ions have been added is supplied to the foot discharge aperture portion, wherein (a) is a drawing showing a case of a defrost/foot discharge mode, and (b) is a drawing showing a case of a foot discharge mode.

### Description of Embodiments

Hereafter, an embodiment of the invention will be described, based on the drawings.

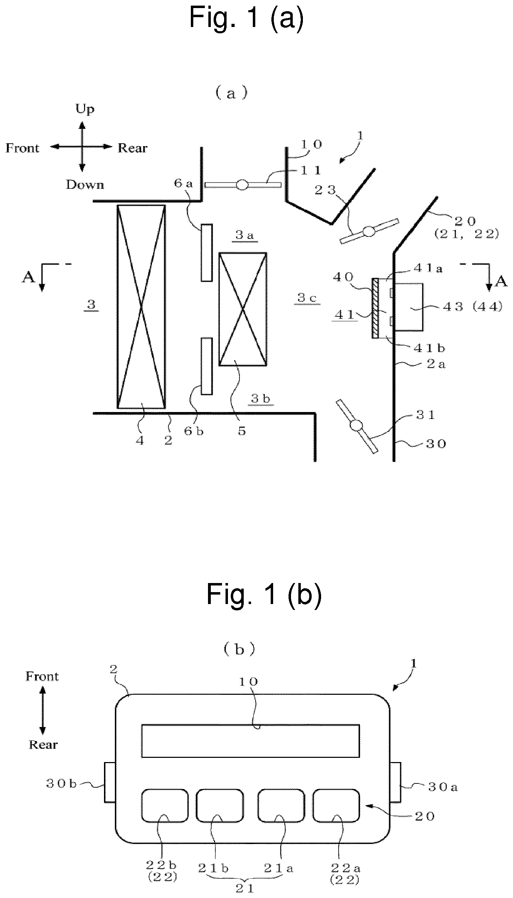

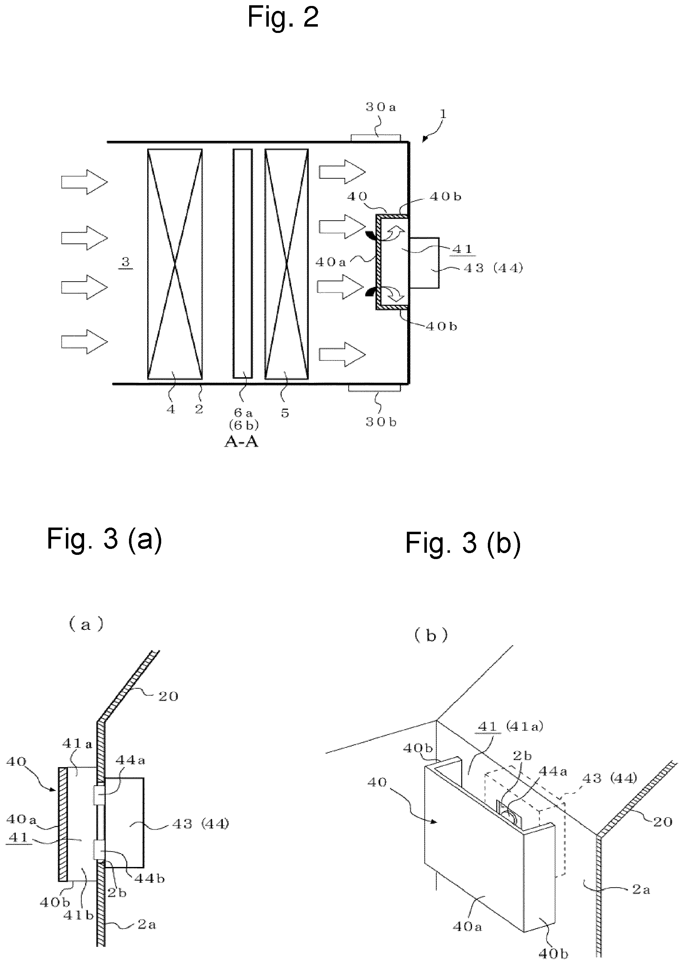

A central type of vehicle air conditioning device 1 (a fully-central type or a semi-central type of air conditioning device) to be mounted in an approximate center of a vehicle dashboard is shown in Fig. 1 and Fig. 2. The air conditioning device 1 is disposed to a vehicle cabin side of a partitioning plate that separates an engine room and the vehicle cabin, and external air (air outside the vehicle cabin) and/or internal air (air inside the vehicle cabin) is introduced into an air conditioning case 2 via an unshown intake device.

The air conditioning case 2 forms an air flow path 3 for air flowing toward the vehicle cabin, an evaporator 4 forming a cooling heat exchanger that enables introduced air to be cooled is disposed on an upstream side of the air flow path 3, and a heater core 5 forming a heating heat exchanger is disposed on a downstream side of the evaporator 4.

The evaporator 4 configures one portion of a refrigeration cycle, is disposed upright in the air flow path 3 in order that all air introduced into the air conditioning case 2 passes through, and can cool air passing through as necessary.

The heater core 5 heats air passing through, with engine cooling water as a heat source, and in this example, is disposed upright in such a way that a gap is formed with an upper face and a lower face of the air conditioning case 2. Consequently, an upper side bypass passage 3a, which allows air that has passed through the evaporator 4 to bypass the heater core 5 rather than passing therethrough, is formed to an upper side of the heater core 5 in the air flow path 3. Also, a lower side bypass passage 3b, which allows air that has passed through the evaporator 4 to bypass the heater core 5 rather than passing therethrough, is formed to a lower side of the heater core 5.

The bypass passages 3a and 3b may be formed by adjusting an installation height of the heater core 5 in the air conditioning case 2, or by recessing the upper face or the lower face of the air conditioning case 2 facing the heater core 5 in a direction away from the heater core 5.

Proportions of air passing through each of the bypass passages 3a and 3b and air passing through the heater core 5 are adjusted using air mix doors 6a and 6b provided on an upstream side of the heater core 5. In the example, an aperture of the upper side bypass passage 3a is adjusted using the upper side air mix door 6a, which can slide along an end face of the heater core 5, and an aperture of the lower side bypass passage 3b is adjusted using the lower side air mix door 6b, which can slide along an end face of the heater core 5.

Temperature adjusting means that adjusts a temperature of air introduced into the air conditioning case 2 is formed of the evaporator 4, the heater core 5, the upper side air mix door 6a, and the lower side air mix door 6b.

The heater core 5, each bypass passage (the upper side bypass passage 3a and the lower side bypass passage 3b), and a mixing area 3c that enables air that has passed through the heater core 5 to be mixed, are formed on the downstream side of the evaporator 4, and a multiple of discharge aperture portions that supply air to be discharged toward the vehicle cabin are formed in the air conditioning case 2 facing the mixing area 3c.

A defrost discharge aperture portion 10 that supplies air to be discharged toward a vehicle windshield is formed in an upper front side of the air conditioning case 2 facing the mixing area 3c, and a vent discharge aperture portion 20 that supplies air to be discharged toward an upper region of the vehicle cabin is formed in an upper rear side of the air conditioning case 2 facing the mixing area 3c. Also, a foot discharge aperture portion 30 that supplies air to be discharged toward a lower region of the vehicle cabin is formed in a lower portion of the air conditioning case 2 facing the mixing area 3c.

Consequently, a vehicle cabin side wall portion 2a with which air that has passed through the heat exchanger (the evaporator 4 and the heater core 5) collides, whereby a flow direction is changed upward and downward, is formed between the vent discharge aperture portion 20 and the foot discharge aperture portion 30 of the air conditioning case 2.

Herein, the vent discharge aperture portion 20 is provided separately for driver's seat use and passenger seat use, because of which center vent discharge aperture portions 21 (a driver's seat center vent discharge aperture portion 21a and a passenger seat center vent discharge aperture portion 21b) are provided toward a center in a width direction (vehicle width direction), and side vent discharge aperture portions 22 (a driver's seat side vent discharge aperture portion 22a and a passenger seat side vent discharge aperture portion 22b) are provided, adjacent to the center vent discharge aperture portions 21, toward a side in the width direction (vehicle width direction).

Also, in this example, the foot discharge aperture portion 30 is such that a driver's seat foot discharge aperture portion 30a is provided in a lower portion of a driver's seat side face of the air conditioning case 2, and a passenger seat foot discharge aperture portion 30b is provided in a lower portion of a passenger seat side face of the air conditioning case 2.

Consequently, although some is led unchanged to a discharge aperture portion, air that has passed through the heat exchanger (the evaporator 4 and the heater core 5) collides with the vehicle cabin side wall portion 2a of the air conditioning case 2, after which the flow direction is changed, the air is divided into air that heads to the upper side and air that heads to the lower side, and when an upper side discharge aperture portion is opened, more air flows toward that aperture portion, while when a lower side discharge aperture portion is opened, more air flows toward the lower side.

An aperture of the defrost discharge aperture portion 10 is adjusted using a defrost door 11 provided inside the defrost discharge aperture portion, and an aperture of the vent discharge aperture portion 20 (an aperture of the center vent discharge aperture portions 21 and the side vent discharge aperture portions 22) is adjusted using a vent door 23 provided in such a way as to face the center vent discharge aperture portions 21 and the side vent discharge aperture portions 22. Also, an aperture of the foot discharge aperture portion 30 is adjusted using a foot door 31 provided in such a way as to face the foot discharge aperture portion 30. Herein, in this example, the aperture of the side vent discharge aperture portions 22 is adjusted in such a way that an amount of air blown is constantly ensured, regardless of a discharge mode.

In this kind of vehicle air conditioning device 1, a space delineating wall body 40 is provided in a wall portion of the air conditioning case 2 that causes a change in the flow direction of air that has passed through the heat exchanger (the evaporator 4 and the heater core 5), which in this example is the vehicle cabin side wall portion 2a in a region between the vent discharge aperture portion 20 and the foot discharge aperture portion 30. As also shown in Fig. 3, the space delineating wall body 40 is formed in such a way as to include a rectangular front wall 40a, which faces the wall portion 2a of the air conditioning case 2 across a predetermined gap, and a side wall 40b provided extending from both side edges of the front wall 40a to the wall portion 2a of the air conditioning case 2, and is of a form wherein an upper end portion and a lower end portion are opened.

Consequently, a space (a function adding space 41) covered by the space delineating wall body is delineated between the wall portion 2a of the air conditioning case 2 and the space delineating wall body 40, and the function adding space 41 communicates with the air flow path 3 (the mixing area 3c) via a first communication portion 41a, which is provided toward the vent discharge aperture portion and opens toward the vent discharge aperture portion 20, and communicates with the air flow path 3 (the mixing area 3c) via a second communication portion 41b formed in a portion toward the foot discharge aperture portion. The first communication portion 41a and the second communication portion 41b are gaps formed between the space delineating wall body 40 and the wall portion 2a, and in this example, a cross-sectional area is the same from the first communication portion to the second communication portion.

Further, a function adding device 43 that adds a predetermined function to air passing through the function adding space 41 is provided in the wall portion 2a of the air conditioning case 2 covered by the space delineating wall body 40.

In this example, the function adding device 43 is configured as an ion generating device 44 that adds ions to air passing through the function adding space 41, is attached to an outer side of the wall portion 2a of the air conditioning case 2, and causes a cathode 44a and an anode 44b, which cause ions to be generated, to face the function adding space 41 through a through hole 2b formed in the wall portion 2a.

Also, in this example, the first communication portion 41a and the second communication portion 41b are formed to have vertical symmetry with respect to the ion generating device 44, and the space delineating wall body 40 is installed in a position in the vehicle cabin side wall portion 2a nearer to the vent discharge aperture portion 20 than to the foot discharge aperture portion 30.

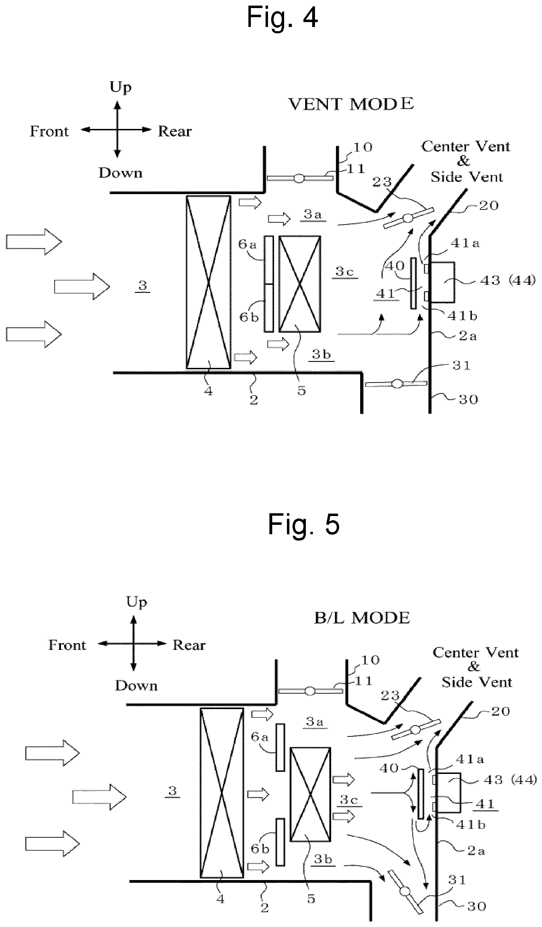

As shown in Fig. 4, the heretofore described configuration is such that in a vent discharge mode wherein the air mix doors 6a and 6b are in a full cooling position (a position wherein all air that has passed through the evaporator 4 is caused to bypass the heater core 5 and caused to pass through the bypass passages 3a and 3b), and only the vent discharge aperture portion 20 is opened, air supplied from an upstream side of the heat exchangers 4 and 5 inside the air conditioning case 2 reaches the mixing area 3c via the upper side bypass passage 3a and the lower side bypass passage 3b after passing through the evaporator 4, and is led to the vent discharge aperture portion 20 via the mixing area 3c.

Air to be led to the vent discharge aperture portion 20 from the mixing area 3c collides with the front wall of the space delineating wall body 40 and the air conditioning case wall portion on either side of the space delineating wall body, whereby the flow direction is changed upward, and the air is led to the vent discharge aperture portion 20 along a surface of the space delineating wall body 40 and the wall portion 2a of the air conditioning case 2, enters the function adding space 41 from the second communication portion 41b, and after ions generated by the ion generating device 44 have been added, is discharged into the air flow path 3 (the mixing area 3c) from the first communication portion 41a, and led to the vent discharge aperture portion 20.

At this time, due to an aspiration effect caused by the flow of air led to the vent discharge aperture portion 20 along the surface of the space delineating wall body, static pressure of the first communication portion 41a of the function adding space 41 becomes lower than static pressure of the second communication portion 41b, because of which air in the function adding space 41 is drawn (suctioned) to the vent discharge aperture portion 20 via the first communication portion 41a, and air in the mixing area 3c is suctioned to the function adding space 41 via the second communication space 41b. Because of this, a flow of air in the function adding space 41 is promoted, and air to which ions have been added can be actively supplied to the vent discharge aperture portion 20 without being caused to stagnate in the space.

Also, in a bi-level discharge mode wherein the air mix doors 6a and 6b are in an intermediate position (a position wherein air that has passed through the evaporator 4 is caused to pass through the heater core 5 and caused to pass through the bypass passages (the upper side bypass passage 3a and the lower side bypass passage 3b)), and the vent discharge aperture portion 20 and the foot discharge aperture portion 30 are opened, as shown in Fig. 5, air supplied inside the air conditioning case 2 is divided into air that passes through the upper side bypass passage 3a and the lower side bypass passage 3b after passing through the evaporator 4 and air that passes through the heater core 5, and the two converge to the rear of the heater core 5, and collide with the wall portion 2a of the air conditioning case 2 or the front wall 40a of the space delineating wall body 40, whereby the flow direction is changed.

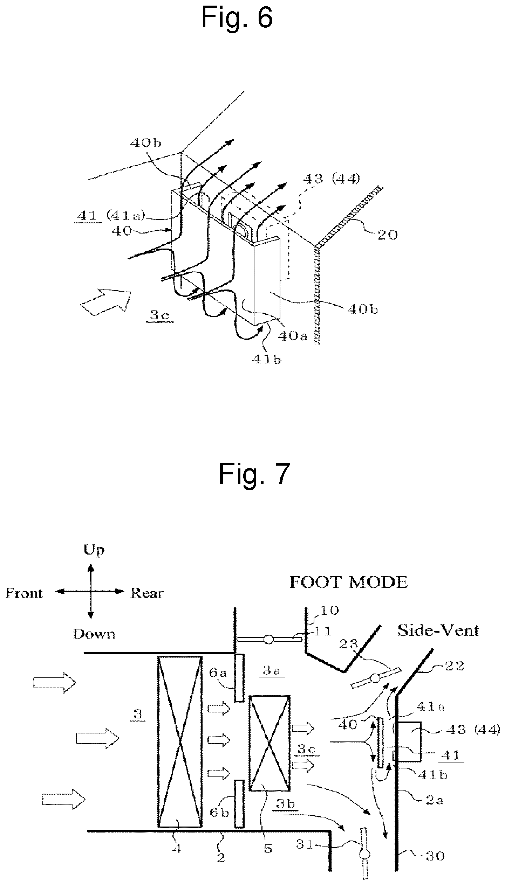

Of the air, air that collides with the front wall 40a of the space delineating wall body 40 is such that the flow direction of one portion is oriented to the upper side and the air flows toward the vent discharge aperture portion 20, and the rest is oriented to the lower side and flows toward the foot discharge aperture portion 30, but as also shown in Fig. 6, the first communication portion 41a is of a relatively low pressure compared with the second communication portion 41b due to a flow of air flowing through the mixing area 3c toward the vent discharge aperture portion 20, an aspiration effect that draws air in the function adding space 41 occurs in the first communication portion 41a, one portion of air flowing toward the foot discharge aperture portion before the space delineating wall body 40 is suctioned from the second communication portion 41b to the function adding space 41, and ions are added from the ion generating device 44 here, after which the air is released from the first communication portion 41a to the vent discharge aperture portion 20. Because of this, there is no stagnation of air inside the function adding space 41, and air to which ions have been added can be sufficiently supplied to the vent discharge aperture portion 20.

In a foot discharge mode wherein the air mix doors 6a and 6b are in a full heating position (a position wherein air that has passed through the evaporator 4 is caused to pass through the heater core 5 only), the defrost discharge aperture portion 10 is closed, the center vent discharge aperture portions 21 are closed, and the side vent discharge aperture portions 22 and the foot discharge aperture portion 30 are opened, as shown in Fig. 7, air supplied inside the air conditioning case 2 passes through the heater core 5 after passing through the evaporator 4, and collides with the vehicle cabin side wall portion 2a of the air conditioning case 2 or the front wall 40a of the space delineating wall body 40, whereby the flow direction is changed.

Of the air, air that collides with the front wall 40a of the space delineating wall body 40 is such that the flow direction of one portion is oriented to the upper side and the air flows toward the side vent discharge aperture portions 22, and the rest is oriented to the lower side and flows toward the foot discharge aperture portion 30. At this time, as the space delineating wall body 40 is disposed nearer to the vent discharge aperture portion 20 than to the foot discharge aperture portion 30, an aspiration effect that draws air in the function adding space 41 to the vent discharge aperture portion 20 side occurs in the first communication portion 41a by the air flow flowing toward the side vent discharge aperture portions 22, one portion of air flowing toward the foot discharge aperture portion 30 is suctioned from the second communication portion 41b to the function adding space 41, and ions are added from the ion generating device 44 here, after which the air is released from the first communication portion 41a to the side vent discharge aperture portions 22. Because of this, the foot discharge mode wherein the side vent discharge aperture portions 22 are opened is also such that air to which ions have been added can be sufficiently supplied to the side vent discharge aperture portions 22.

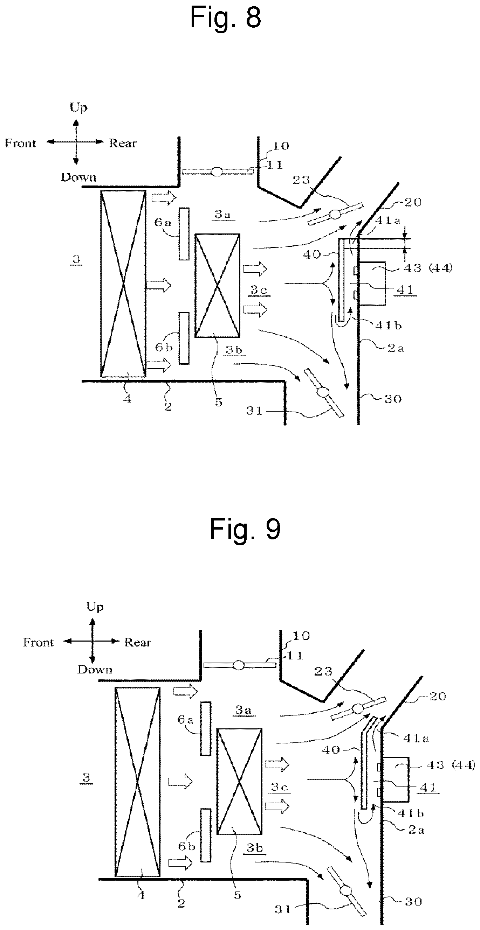

Heretofore, a configuration wherein air to which ions have been added is supplied to the vent discharge aperture portion 20 has been described, but modifications shown in Fig. 8 to Fig. 12 may be employed as methods whereby air to which ions have been added is more effectively supplied to the vent discharge aperture portion 20.

Of these, an example of Fig. 8 is such that a distance between the first communication portion 41a and the vent discharge aperture portion 20 is arranged to be shorter than a distance between the second communication portion and the foot discharge aperture portion, and air to which ions have been added is supplied directly to the vent discharge aperture portion by the first communication portion being opened directly into the vent discharge aperture portion.

This configuration is such that as the first communication portion communicates directly with the vent discharge aperture portion, an aspiration effect is easily obtained, and air to which ions have been added inside the function adding space 41 can be more effectively supplied to the vent discharge aperture portion 20.

This configuration is such that in order to further increase the aspiration effect, an upper end portion of the space delineating wall body 40 may be extended along an inner wall face of the vent discharge aperture portion 20 toward an opened end in order that the first communication portion 41a penetrates into the vent discharge aperture portion 20, as shown in Fig. 9.

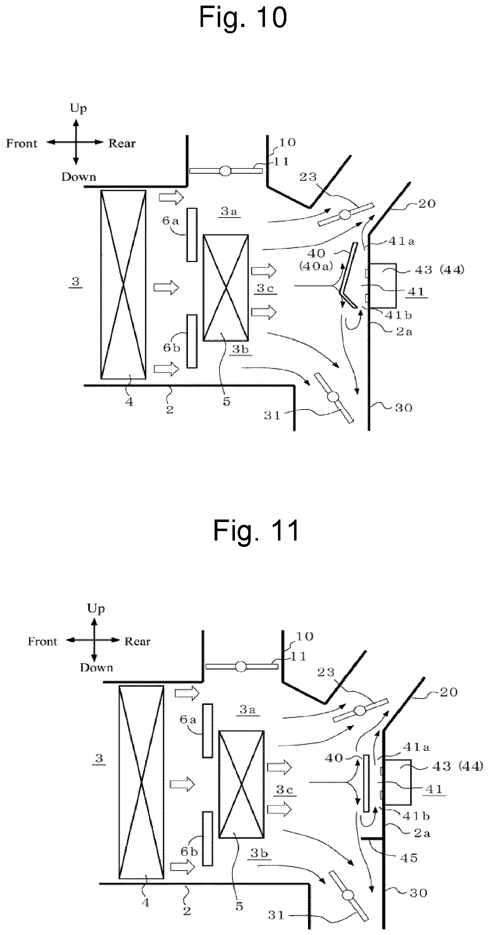

Also, the space delineating wall body 40 may be configured in such a way that an intermediate portion of the front wall 40a with which air flowing from upstream collides is caused to protrude to the upstream side (the mixing area 3c), as shown in Fig. 10.

This kind of configuration is such that air flowing from upstream is smoothly divided to the upper side and the lower side by the front wall 40a of the space delineating wall body 40, because of which a region on a front face of the space delineating wall body 40 in which air stops is unlikely to be formed, and air can reliably be caused to flow oriented upward and downward, whereby an aspiration effect can be increased.

In this case too, in order to obtain an aspiration effect on a vent discharge port side (the first communication portion 41a side), it is good when a position in which air is caused to branch is toward a lower portion of the front wall 40a, in order that a large amount of air that has collided with the front wall 40a flows toward the defrost discharge aperture portion (is oriented upward).

In an example of Fig. 11, a plate-form guide portion 45 protruding to an inner side from the wall portion 2a of the air conditioning case 2 is provided below the second communication portion 41b of the space delineating wall body 40, and air flowing oriented downward from above the guide portion 45 is stopped and easily led to the second communication portion 41b.

This kind of configuration is such that a problem wherein air immediately below the space delineating wall body is prevented from being led to the foot discharge aperture portion even when the foot discharge aperture portion 30 is opened, and an aspiration effect occurs in the second communication portion 41b, can be eliminated, and a suctioning of air to the function adding space 41 can be promoted owing to an aspiration effect occurring in the first communication portion 41a.

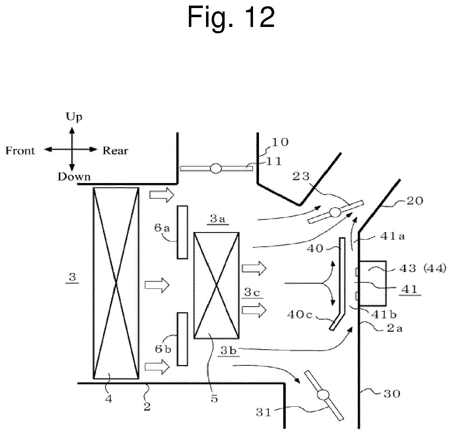

Also, means for facilitating an introduction of air into the function adding space 41 may be provided in the space delineating wall body 40, as shown in Fig. 12. For example, a guide portion 40c may be formed by a lower end portion of the space delineating wall body 40 being caused to protrude to the mixing area 3c side, facilitating a formation of a flow of air that penetrates into the function adding space 41.

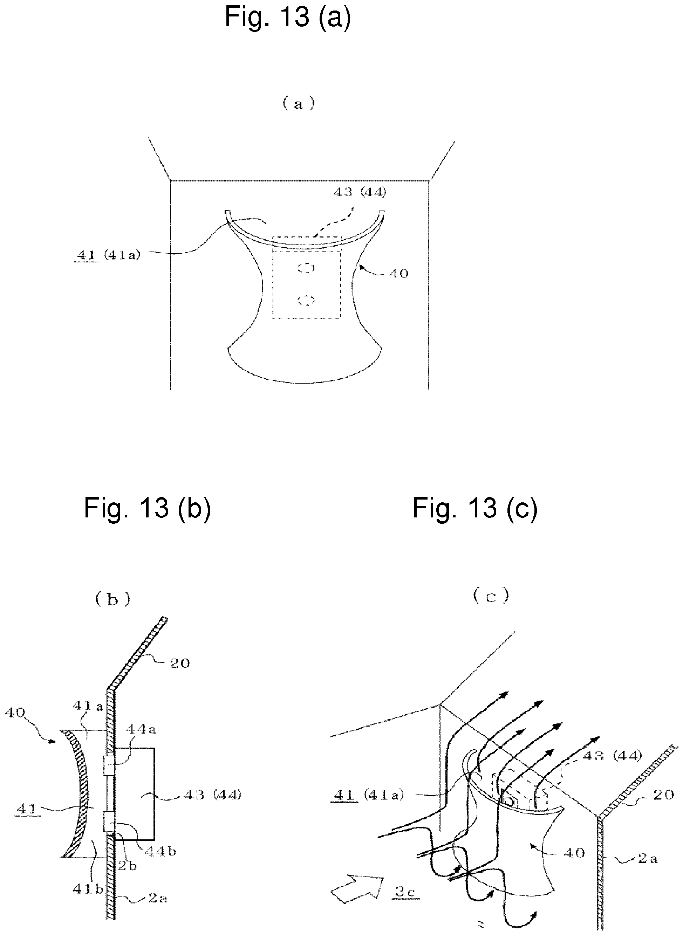

Also, an example wherein the space delineating wall body 40 is such that the flow path cross-sectional area is practically the same from the first communication portion 41a, which causes the function adding space 41 to communicate with the air flow path 3, to the second communication portion 41b has been shown, but, for example, the flow path cross-sectional area may be reduced in an intermediate portion (the flow path cross-sectional area may be smaller than in the communication portions), as shown in Fig. 13. In the example of Fig. 13, a form is such that the function adding space 41 is semi-circular in cross-section, and an intermediate portion of the space delineating wall body 40 is gently indented in such a way that the flow path cross-sectional area is smallest in the intermediate portion.

This kind of configuration is such that air is more easily introduced into the function adding space 41, and air suctioned into the function adding space 41 is such that ions are added by the ion generating device 44, and a flow speed is increased in the intermediate portion, after which the air is released from a communication portion (the first communication portion 41a) with a larger passage cross-sectional area, because of which air to which ions have been added is supplied promptly to the vent discharge aperture portion 20 without colliding with the space delineating wall body 40. Because of this, a problem wherein a function is reduced (ions are annihilated) due to air to which ions have been added colliding with the space delineating wall body can be avoided, and air to which ions have been added can reliably be supplied to the vent discharge aperture portion by the flow speed being increased.

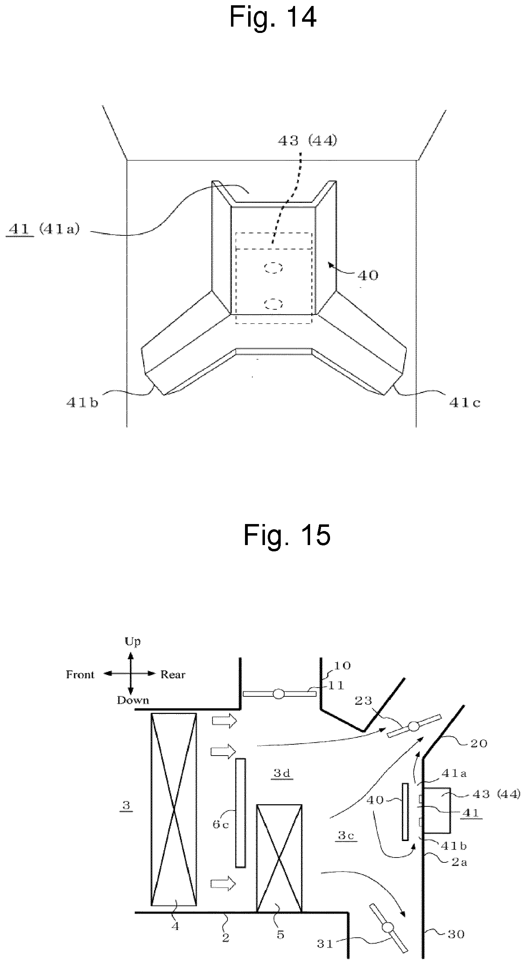

Also, an example wherein two communication portions, the communication portions 41a and 41b, are provided has been given, but a configuration may be such that three or more communication portions are provided. For example, as shown in Fig. 14, a lower portion of the space delineating wall body 40 may be divided into a fork, and include the first communication portion 41a, which is brought into proximity to the vent discharge aperture portion 20 and opens toward the vent discharge aperture portion 20, and second and third communication portions 41b and 41c, which are brought into proximity to the driver's seat foot discharge aperture portion 30a and the passenger seat foot discharge aperture portion 30b respectively. This kind of configuration is particularly effective in an air conditioning device wherein the driver's seat foot discharge aperture portion 30a is formed in the driver's seat side face of the air conditioning case 2, and the passenger seat foot discharge aperture portion 30b is formed in the passenger seat side face of the air conditioning case 2.

A description has been given of a case wherein the heretofore described configuration is such that the upper side bypass passage 3a is formed on the upper side of the heater core 5, the lower side bypass passage 3b is formed on the lower side of the heater core 5, and the apertures of the bypass passages 3a and 3b are adjusted using the air mix doors 6a and 6b respectively, but the same operational advantages can be obtained by employing the same configuration in an air conditioning device wherein a bypass passage 3d is formed only above the heater core 5, and proportions of air that passes through the bypass passage 3d and air that bypasses the heater core 5 are adjusted using one air mix door 6c, as shown in Fig. 15.

The examples thus far are such that examples wherein air to which ions have been added in the function adding space 41 is sufficiently supplied toward the vent discharge aperture portion 20 have been described, but when there is a demand for air to which ions have been added to be supplied to the vehicle cabin interior via the foot discharge aperture portion 30, it is good when the installation position or the form of the space delineating wall body 40 is adjusted in such a way that the communication portion 41b, which opens toward the foot discharge aperture portion 30, is of a lower pressure than other communication portions.

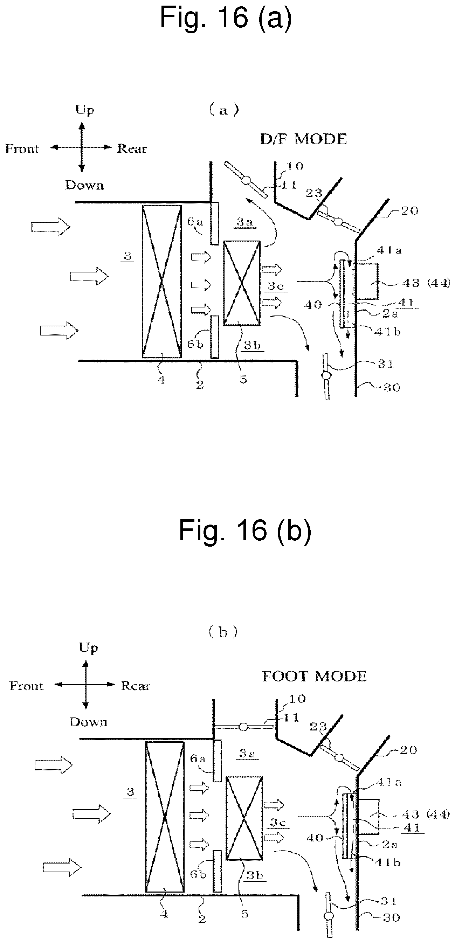

For example, it is sufficient that the second communication portion 41b of the space delineating wall body 40 is of a lower pressure than the first communication portion 41a in a discharge mode wherein the foot discharge aperture portion 30 is opened (a defrost/foot discharge mode or a foot discharge mode), because of which, for example, it is good when the space delineating wall body 40 is extended in order that the second communication portion 41a, which opens toward the foot discharge aperture portion 30, is brought nearer to the foot discharge aperture portion, as shown in Fig. 16, whereby an aspiration effect in the second communication portion 41b is increased.

Also, as a modification of Fig. 16, each kind of aspect shown as an example for supplying ions to the vent discharge aperture portion can be employed in the same way by combining with the aspect of Fig. 16. For example, a guide plate may be provided immediately above the first communication portion 41a, an intermediate portion of the front wall 40a may be caused to protrude to the upstream side in order to increase an amount of air diverted to the foot discharge aperture portion in front of the space delineating wall body 40, or an upper end portion of the space delineating wall body 40 may be caused to protrude to the mixing area 3c side.

Heretofore, an example wherein the function adding device 43 (the ion generating device 44) is attached to an outer face of the wall portion 2a of the air conditioning case 2 has been shown, but the function adding device 43 may be attached to an inner face of the wall portion 2a of the air conditioning case 2, or may be attached to the space delineating wall body 40.

Also, the ion generating device 44 has been given heretofore as an example of a function adding device that adds a function to air that has passed through a function adding space, but one of a fragrance generating device that adds a fragrance function, a deodorizing device that adds a deodorizing function, a humidity demand device that adds a humidity adjusting function, or a sanitizing device that adds a sanitizing function may be provided, or the heretofore described devices may be combined as appropriate.

### Reference Signs List

- 1: Vehicle air conditioning device
- 2: Air conditioning case
- 2a: Wall portion
- 3: Air flow path
- 4: Evaporator
- 5: Heater core
- 6a, 6b, 6c: Air mix door
- 20: Vent discharge aperture portion
- 30: Foot discharge aperture portion
- 40: Space delineating wall body
- 41: Function adding space
- 41a: First communication portion
- 41b: Second communication portion
- 43: Function adding device
- 44: Ion generating device

## Claims

1. A vehicle air conditioning device (1) that releases air to which a function has been added into a vehicle cabin, the vehicle air conditioning device (1) comprising:
an air conditioning case (2), in whose interior an air flow path (3) is formed and which includes a multiple of discharge aperture portions (10, 20, 30) that can blow introduced air into the vehicle cabin; and
a heat exchanger (4, 5), disposed inside the air conditioning case (2), that causes an exchange of heat with introduced air, wherein
a space delineating wall body (40) that delineates a function adding space (41) between the space delineating wall body (40) and a wall portion (2a), which is a wall portion of the air conditioning case (2) and causes a flow direction of air that has passed through the heat exchanger (4, 5) to change, is provided in the wall portion (2a),
a function adding device (43) that adds a predetermined function to air passing through the function adding space (41) is provided in the wall portion (2a) or the space delineating wall body (40),
the function adding space (41) communicates with the air flow path (3) via at least two communication portions (41a, 41b), and at least one communication portion (41a) is opened facing one of the multiple of discharge aperture portions (10, 20, 30) in order that a pressure is lower than that of the other communication portion (41b) in a predetermined discharge mode.

2. The vehicle air conditioning device according to claim 1, wherein
the multiple of discharge aperture portions include a vent discharge aperture portion (20), which supplies air to be blown to a vehicle cabin upper region, and a foot discharge aperture portion (30), which supplies air to be blown to a vehicle cabin lower region,
the function adding device (43) and the space delineating wall body (40) are provided in the wall portion (2a) between the vent discharge aperture portion (20) and the foot discharge aperture portion (30),
the function adding space (41) communicates with the air flow path (3) via a first communication portion (41a) provided toward the vent discharge aperture portion (20) and a second communication portion (41b) provided toward the foot discharge aperture portion (30), and the first communication portion (41a) is opened facing the vent discharge aperture portion (20) in order that a pressure is lower than that of the second communication portion (41b) at a time of a discharge mode wherein the vent discharge aperture portion (20) is opened.

3. The vehicle air conditioning device according to claim 1, wherein
the multiple of discharge aperture portions include a vent discharge aperture portion (20), which supplies air to be blown to a vehicle cabin upper region, and a foot discharge aperture portion (30), which supplies air to be blown to a vehicle cabin lower region,
the function adding device (43) and the space delineating wall body (40) are provided in the wall portion (2a) between the vent discharge aperture portion (20) and the foot discharge aperture portion (30),
the function adding space (41) communicates with the air flow path (3) via a first communication portion (41a) provided toward the vent discharge aperture portion (20) and a second communication portion (41b) provided toward the foot discharge aperture portion (30), and the second communication portion (41b) is opened facing the foot discharge aperture portion (30) in order that a pressure is lower than that of the first communication portion (41a) at a time of a discharge mode wherein the foot discharge aperture portion (30) is opened.

4. The vehicle air conditioning device according to any of claims 1 to 3, wherein the communication portion (41a) that is of a relatively low pressure is formed in a position nearer than the other communication portion (41b) to a discharge aperture portion.

5. The vehicle air conditioning device according to any of claims 1 to 4, wherein the space delineating wall body (40) is such that an intermediate portion of a face with which air flowing from upstream collides is caused to protrude to an upstream side.

6. The vehicle air conditioning device according to any of claims 1 to 5, wherein a guide portion (45, 40c) that facilitates an introduction of air into the other communication portion (41b) is provided in a portion of the space delineating wall body (40) in which the other communication portion (41b) is formed, or in a vicinity thereof.

7. The vehicle air conditioning device according to any of claims 1 to 6, wherein the function adding space (41) delineated by the space delineating wall body (40) is such that a passage cross-sectional area of an intermediate portion is smaller than a passage cross-sectional area of the communication portions.

8. The vehicle air conditioning device according to any of claims 1 to 7, wherein the heat exchanger has a cooling heat exchanger (4), which cools air passing through, and a heating heat exchanger (5), which is disposed on a downstream side of the cooling heat exchanger (4) and heats air passing through, and the heating heat exchanger (5) is disposed in the air flow path in such a way as to form a bypass passage (3a, 3b) on an upper side and a lower side of the heating heat exchanger (5) .

9. The vehicle air conditioning device according to any of claims 1 to 7, wherein the heat exchanger has a cooling heat exchanger (4), which cools air passing through, and a heating heat exchanger (5), which is disposed on a downstream side of the cooling heat exchanger (4) and heats air passing through, and the heating heat exchanger (5) is disposed in the air flow path in such a way as to form a bypass passage (3d) on an upper side only of the heating heat exchanger (5).

10. The vehicle air conditioning device according to any of claims 1 to 9, wherein a function added to air by the function adding device (43) is at least one of an ion adding function, a fragrance function, a deodorizing function, a humidity adjusting function, and a sanitizing function.
